# EUROPÄISCHE PATENTSCHRIFT

(11) **EP 4 074 429 B1**
(45) Veröffentlichungstag und Bekanntmachung des Hinweises auf die Patenterteilung: **11.12.2024**
(21) Anmeldenummer: 22170619.5
(22) Anmeldetag: 05.03.2020
(51) Int. Cl.: B08B 9/045, B29C 48/27, B08B 3/02

(54) **WELLEN-REINIGUNGSVORRICHTUNG ZUM REINIGEN MINDESTENS EINER BEHANDLUNGSELEMENTWELLE EINER SCHNECKENMASCHINE**
SHAFT CLEANING DEVICE FOR CLEANING AT LEAST ONE TREATMENT ELEMENT SHAFT OF A SCREW MACHINE
DISPOSITIF DE NETTOYAGE DES ARBRES PERMETTANT DE NETTOYER AU MOINS UN ARBRE D'ÉLÉMENT D'USINAGE D'UNE MACHINE À VIS SANS FIN

(30) Priorität: 19.03.2019 DE 102019203661
(43) Veröffentlichungstag der Anmeldung: 19.10.2022
(62) Teilanmeldung aus: 20712216.9
(73) Patentinhaber: Coperion GmbH, 70469 Stuttgart (DE)
(72) Erfinder: Schmudde, Markus, 71711 Steinheim a.d. Murr (DE); Tabeling, Mareike, 70327 Stuttgart (DE); Hagel, Franziska, 70499 Stuttgart (DE); Büchler, Andreas, 70734 Fellbach (DE); Nuzzi, Patricio, 71254 Ditzingen (DE)
(74) Vertreter: Rau, Schneck & Hübner Patentanwälte Rechtsanwälte PartGmbB

(56) Entgegenhaltungen:
- EP-A1- 3 446 797
- JP-A- 2002 144 374
- JP-A- H07 195 482
- KR-B1- 101 925 712
- US-A- 5 156 861
- US-A- 5 706 842

## Beschreibung

Die vorliegende Patentanmeldung nimmt die Priorität der deutschen Patentanmeldung DE 10 2019 203 661.9 in Anspruch.

Die Erfindung betrifft eine Wellen-Reinigungsvorrichtung zum Reinigen mindestens einer Behandlungselementwelle der Schneckenmaschine sowie ein Reinigungssystem mit einer derartigen Wellen-Reinigungsvorrichtung. Die Erfindung ist ferner auf ein Verfahren zum Reinigen einer Schneckenmaschine gerichtet.

Aus DE 44 17 357 A1 sind ein Verfahren sowie eine Vorrichtung zum Reinigen einer Schneckenmaschine bekannt. Die Reinigung erfolgt durch Hindurchleiten von Reinigungsflüssigkeit durch die Schneckenmaschine, wobei insbesondere Anschlüsse zum Zuführen der Reinigungsflüssigkeit in einem Gehäuse der Schneckenmaschine vorgesehen sind. Eine derartige Vorrichtung erfordert aufwendige konstruktive Eingriffe an der Schneckenmaschine, ist wartungsintensiv und gewährleistet nicht immer die erforderliche Reinigungsgüte.

Wellen-Reinigungsvorrichtungen sind ferner bekannt aus der JP H07 195482 A, der KR 101 925 712 B1, der EP 3 446 797 A1, der JP 2002 144374 A, der US 5 156 861 A, die eine Vorrichtung gemäß dem Oberbegriff von Anspruch 1 offenbart, und der US 5 706 842 A.

Der Erfindung liegt die Aufgabe zugrunde, eine Wellen-Reinigungsvorrichtung zum Reinigen mindestens einer Behandlungselementwelle einer Schneckenmaschine zu schaffen, die für bestehende Schneckenmaschinen verwendbar ist und die Reinigung der Behandlungselementwelle besonders zuverlässig gewährleistet und einfach zu warten ist. Diese Aufgabe wird durch eine Wellen-Reinigungsvorrichtung mit den Merkmalen des Anspruchs 1 gelöst. Die Vorteile der erfindungsgemäßen Wellen-Reinigungsvorrichtung entsprechen den Vorteilen der nachfolgend beschriebenen Gehäuse-Reinigungsvorrichtung. Insbesondere kann die mindestens eine Wellen-Reinigungseinheit mit den Merkmalen der nachfolgend beschriebenen mindestens einen Gehäuse-Reinigungseinheit weitergebildet werden.

Eine derartige Wellen-Reinigungsvorrichtung gewährleistet eine besonders gründliche Reinigung der mindestens einen Behandlungselementwelle. Eine Beanspruchung der Behandlungselementwelle durch feuchtebedingte Korrosion wird zuverlässig verhindert. In dem mindestens einen Feuchtreinigungsabschnitt wird flüssiges Reinigungsmedium auf die Behandlungselementwelle aufgebracht. In dem mindestens einen Trockenreinigungsabschnitt wird die Behandlungselementwelle ohne den Einsatz flüssiger Reinigungsmedien gereinigt. Insbesondere ist der mindestens eine Trockenreinigungsabschnitt dazu ausgebildet, die Behandlungselementwelle zu trocknen. Hierzu weist die Wellen-Reinigungsvorrichtung im Bereich des Trockenreinigungsabschnitts mindestens ein Trockengebläse auf.

Vorzugsweise weist die Reinigungskammer mindestens eine, insbesondere mindestens zwei, insbesondere mindestens drei, insbesondere mindestens vier Reinigungsabschnitte auf. Vorzugsweise sind die Reinigungsabschnitte durch Kammerdichtungen voneinander fluiddicht bzw. flüssigkeitsdicht getrennt. Die Kammerdichtungen können als Dichtvorhänge ausgebildet sein.

Gemäß einem weiteren Aspekt der Erfindung kann die Wellen-Reinigungsvorrichtung zur verlagerungsfreien Aufnahme der mindestens einen Behandlungselementwelle relativ zu der Reinigungskammer ausgebildet sein. Vorzugsweise ist die mindestens eine Wellen-Reinigungseinheit derart ausgebildet, dass diese relativ zu der mindestens einen Behandlungselementwelle und/oder zu der Reinigungskammer verlagerbar ist. Beispielsweise kann die mindestens eine Wellen-Reinigungseinheit entlang der Kammer-Längsachse und/oder um die Kammer-Längsachse herum, insbesondere um die Behandlungselementwelle herum, insbesondere kreisförmig und/oder spiralförmig, verlagerbar ausgebildet sein. Die Reinigung der Behandlungselementwelle kann somit besonders intensiv und zuverlässig erfolgen.

Gemäß einem Aspekt der Erfindung weist die Reinigungskammer mindestens ein Sichtfenster auf. Mittels des Sichtfensters kann der Reinigungszustand der Behandlungselementwelle überwacht werden. Die Reinigungskammer kann einen, insbesondere abgedichteten, Handeingriff zum manuellen Reinigen durch einen Benutzer aufweisen. Hierzu kann die Wellen-Reinigungsvorrichtung eine händisch relativ zu der mindestens einen Behandlungselementwelle verlagerbare Wellen-Reinigungseinheit aufweisen.

Eine Wellen-Reinigungsvorrichtung nach Anspruch 2 gewährleistet eine besonders gründliche Reinigung der mindestens einen Behandlungselementwelle. Vorzugsweise kann die mindestens eine Wellen-Reinigungsdüse mit den Merkmalen der nachfolgend beschriebenen mindestens einen Gehäuse-Reinigungsdüse weitergebildet werden.

Eine Wellen-Reinigungsvorrichtung nach Anspruch 3 ist besonders wirtschaftlich betreibbar. Die Wellen-Antriebseinrichtung kann zum translatorischen und/oder rotatorischen Verlagern der mindestens einen Behandlungselementwelle relativ zu der Reinigungskammer ausgebildet sein. Beispielsweise kann die Behandlungselementwelle mittels der Wellen-Antriebseinrichtung rein rotatorisch, insbesondere um eine Kammer-Längsachse der Reinigungskammer, verlagerbar sein. Alternativ kann die mindestens eine Behandlungselementwelle mittels der Wellen-Antriebseinrichtung relativ zu der Reinigungskammer translatorisch verlagert werden. Insbesondere kann die Wellen-Antriebseinrichtung dazu ausgebildet sein, die Behandlungselementwelle beim Reinigen durch die Reinigungskammer, insbesondere die mehreren Reinigungsabschnitte, hindurchzubewegen. Dadurch, dass die Wellen-Reinigungsvorrichtung mit einer Wellen-Antriebseinrichtung ausgebildet ist, kann die Reinigung der mindestens einen Behandlungselementwelle automatisiert werden.

Die mindestens eine Wellen-Reinigungseinheit kann mindestens ein Wellen-Kontaktreinigungselement aufweisen. Das mindestens eine Wellen-Kontaktreinigungselement kann durch die Merkmale des nachfolgend beschriebenen mindestens einen Gehäuse-Kontaktreinigungselements weitergebildet werden. Vorzugsweise ist das mindestens eine Wellen-Kontaktreinigungselement drehantreibbar. Insbesondere kann das mindestens eine Wellen-Kontaktreinigungselement als, insbesondere mit der mindestens einen Behandlungselementwelle dichtkämmende, Reinigungsbürste ausgebildet sein. Gemäß einem Aspekt der Erfindung weist die mindestens eine Wellen-Reinigungseinheit in dem Trockenreinigungsabschnitt die mindestens eine Wellen-Kontaktreinigungseinheit in Form einer Reinigungsbürste auf.

Gemäß einem weiteren Aspekt der Erfindung ist die Wellen-Reinigungsvorrichtung dazu ausgebildet, in mindestens einem der Reinigungsabschnitte ausschließlich Klarwasser auszubringen. Die Wellen-Reinigungsvorrichtung kann ferner dazu ausgebildet sein, in mindestens einem der Reinigungsabschnitte laugenhaltiges und/oder säurehaltiges und/oder mit Reinigungsgranulat versetztes Reinigungsmedium auszubringen. Vorzugsweise weist der Feuchtreinigungsabschnitt, insbesondere aufeinanderfolgend, einen Einweichabschnitt und/oder einen Reinigungsabschnitt und/oder einen Klarspülabschnitt auf. Die Wellen-Reinigungsvorrichtung kann auch zur vollständigen Trockenreinigung ausgebildet sein. Hierzu kann die Wellen-Reinigungsvorrichtung zum Ausbringen von, insbesondere mit Reinigungsgranulat versetztem, gasförmigem Reinigungsmedium ausgebildet sein und/oder, insbesondere ausschließlich, das mindestens eine Wellen-Kontaktreinigungselement zum kontaktierenden Reinigen der Behandlungselementwelle aufweisen.

Eine Wellen-Reinigungsvorrichtung nach Anspruch 4 ist besonders flexibel und wirtschaftlich betreibbar. Vorzugsweise ist jedes der mindestens zwei reversibel miteinander verbindbaren Kammermodule zum Ausbilden von mindestens einem, insbesondere mindestens zwei, Reinigungsabschnitten ausgebildet. Vorteilhaft wird hierdurch erreicht, dass die Reinigungskammer flexibel entsprechend der Länge der mindestens einen Behandlungselementwelle anpassbar ist. Ferner können unterschiedliche Reinigungsfunktionen miteinander kombiniert werden. Zur einfachen Wartung können einzelne Kammermodule ausgetauscht werden.

Eine weitere nicht beanspruchte Aufgabe ist, eine verbesserte Gehäuse-Reinigungsvorrichtung zum Reinigen eines Gehäuses einer Schneckenmaschine zu schaffen, welche besonders einfach zu warten ist und eine hohe Reinigungsgüte gewährleistet.

Diese Aufgabe wird gelöst durch eine nicht beanspruchte Gehäuse-Reinigungsvorrichtung zum Reinigen eines Gehäuses einer Schneckenmaschine, aufweisend eine relativ zu dem Gehäuse verlagerbare Trageinheit und mindestens eine an der Trageinheit angebrachte Gehäuse-Reinigungseinheit zum Reinigen einer Innenwand des Gehäuses, wobei die mindestens eine Gehäuse-Reinigungseinheit reversibel in das Gehäuse einführbar ist. Es wurde erkannt, dass die Gehäuse-Reinigungsvorrichtung mit der Trageinheit und der daran angeordneten Gehäuse-Reinigungseinheit derart ausgebildet sein muss, dass die mindestens eine Gehäuse-Reinigungseinheit reversibel in das Gehäuse der Schneckenmaschine einführbar ist, um eine hohe Reinigungsgüte im Bereich des Gehäuses der Schneckenmaschine bei geringem Wartungsaufwand, insbesondere ohne konstruktive Änderungsmaßnahmen, zu gewährleisten. Zur Reinigung des Gehäuses ist die mindestens eine Behandlungselementwelle der Schneckenmaschine aus dem Gehäuse entfernt. Die Schneckenmaschine kann als Einwellen-Schneckenmaschine ausgebildet sein. Vorzugsweise handelt es sich bei der Schneckenmaschine um eine Mehrwellen-Schneckenmaschine, insbesondere um eine Zweiwellen-Schneckenmaschine. Zur Reinigung des Gehäuses sind vorzugsweise sämtliche der Behandlungselementwellen aus dem Gehäuse entfernt. Unter der Einführbarkeit in das Gehäuse wird die Einführbarkeit in einen Innenraum des Gehäuses, insbesondere in einen Behandlungsraum des Gehäuses, verstanden. Vorzugsweise sind die Trageinheit und/oder die mindestens eine Gehäuse-Reinigungseinheit über mindestens 25 %, insbesondere mindestens 50 %, insbesondere 75 %, einer Längserstreckung des Innenraums, insbesondere des Behandlungsraums, in das Gehäuse einführbar. Hierzu ist eine Abmessung der Trageinheit und/oder der mindestens einen Gehäuse-Reinigungseinheit, insbesondere in radialer Richtung zu einer Längsachse der Trageinheit, geringer als eine Abmessung des Innenraums. Eine Längserstreckung der Trageinheit, beträgt vorzugsweise mindestens 25 %, insbesondere mindestens 50 %, insbesondere mindestens 75 %, insbesondere mindestens 100 % einer Länge des Innenraums. Vorteilhaft wird hierdurch erreicht, dass die Innenwand des Gehäuses über seine gesamte Länge zuverlässig reinigbar ist.

Gemäß einem weiteren Aspekt ist die nicht beanspruchte Gehäuse-Reinigungseinheit, insbesondere beim Reinigen des Gehäuses, entlang und/oder quer zu einer Längsrichtung des Gehäuses relativ zu diesem verlagerbar. Die Reinigung des Gehäuses kann somit besonders flexibel und sicher erfolgen.

Die Trageinheit kann starr, insbesondere als starrer Stab, oder flexibel, insbesondere als Kette und/oder als Seil, ausgebildet sein. Die Trageinheit kann zum einfachen Einführen in das Gehäuse und/oder zum Verlagern in dem Gehäuse als Teleskopstab ausgebildet sein. Die Reinigung des Gehäuses kann somit auch bei nur geringem zur Verfügung stehendem Bauraum erfolgen.

Gemäß einem nicht beanspruchten weiteren Aspekt ist die nicht beanspruchte Gehäuse-Reinigungsvorrichtung dazu ausgebildet mindestens ein Reinigungsmedium in das Gehäuse einzubringen. Das mindestens eine Reinigungsmedium kann flüssige Bestandteile, insbesondere Wasser und/oder Lösemittel und/oder säurehaltige Reinigungsmedien und/oder laugenhaltige Reinigungsmedien, und/oder feste Bestandteile, insbesondere Reinigungsgranulate, insbesondere Reinigungssand und/oder keramische Granulate und/oder Trockeneis, und/oder Suspensionen aus den festen und den flüssigen Bestandteilen, und/oder Druckluft, insbesondere Heißluft, und/oder Dampf umfassen. Insbesondere kann die Gehäuse-Reinigungsvorrichtung dazu ausgebildet sein, unterschiedliche Reinigungsmedien gleichzeitig oder zeitlich nacheinander in das Gehäuse einzubringen. Die Gehäuse-Reinigungsvorrichtung kann zur Nassreinigung mit flüssigen Reinigungsmedien ausgebildet sein. Die Gehäuse-Reinigungsvorrichtung kann dazu ausgebildet sein, das Reinigungsmedium mit einstellbarer Temperatur und/oder einstellbarem Druck in das Gehäuse einzuleiten. Die Gehäuse-Reinigungsvorrichtung kann auch zur, insbesondere ausschließlichen, Trockenreinigung, insbesondere mit Druckluft, ausgebildet sein. Vorzugsweise ist die Gehäuse-Reinigungsvor-richtung zum Reinigen des Gehäuses in mehreren zeitlich aufeinander folgenden Schritten ausgebildet. Vorzugsweise wird in dem letzten der aufeinander folgenden Reinigungsschritte die Trockenreinigung vorgenommen, um eine Korrosion des Gehäuses zu vermeiden. Insbesondere kann der letzte Reinigungsschritt das Aufbringen eines Korrosionsschutzmittels umfassen. Insbesondere gewährleistet eine Trocknung des Gehäuses mit der Druckluft, dass Korrosion sicher vermieden wird.

Vorzugsweise umfasst die nicht beanspruchte Gehäuse-Reinigungsvorrichtung mindestens ein Zuflussventil und/oder mindestens ein Abflussventil zum Steuern eines Zuflusses und/oder eines Abflusses des Reinigungsmediums. Der Reinigungsprozess ist hierdurch besonders flexibel steuerbar. Das Gehäuse umfasst eine Zuführöffnung zum Zuführen des zu fördernden Mediums. Ferner umfasst das Gehäuse eine Ausbringöffnung zum Ausbringen des zu fördernden Mediums. Gemäß einem weiteren Aspekt umfasst die Gehäuse-Reinigungsvorrichtung eine Verschließeinheit zum Verschließen der Ausbringöffnung. Vorzugsweise ist die Verschließeinheit dichtend an dem Gehäuse anbringbar. Die Verschließeinheit kann eine Abflussleitung zum Führen des mindestens einen Reinigungsmediums aus dem Gehäuse aufweisen. Ferner kann die Verschließeinheit eine Trageinheit-Durchführung zum Durchführen der Trageinheit aufweisen. Im Bereich der Trageinheit-Durchführung kann die Trageinheit die Verschließeinheit durchdringen. Vorzugsweise weist die Verschließeinheit eine Durchführungsdichtung zum Abdichten gegenüber der Trageinheit auf. Die Verschließeinheit kann eine Durchführungslagerung zum axialen und/oder rotatorischen Lagern der Trageinheit aufweisen. Durch die Anordnung der Verschließeinheit an dem Gehäuse kann dieses beim Reinigen weitestgehend abgedichtet werden. Die Trageinheit und/oder die mindestens eine Gehäuse-Reinigungseinheit können aufgrund der Trageinheit-Durchführung weitestgehend frei, mit definiertem Abstand zu dem Gehäuse verlagert werden.

Gemäß einem nicht beanspruchten weiteren Aspekt weist die nicht beanspruchte Gehäuse-Reinigungsvorrichtung eine Gehäuse-Antriebseinrichtung auf. Die Gehäuse-Antriebseinrichtung kann an der Trageinheit, insbesondere reversibel, angebracht sein. Die Gehäuse-Antriebseinrichtung ist vorzugsweise dazu ausgebildet, die Trageinheit und/oder die mindestens eine Gehäuse-Reinigungseinheit rotatorisch und/oder translatorisch, insbesondere entlang der Längserstreckung des Gehäuses, relativ zu dem Gehäuse zu verlagern. Die Gehäuse-Antriebseinrichtung kann in die Verschließeinheit, insbesondere in die Durchführungslagerung, integriert sein. Die Gehäuse-Antriebseinrichtung ermöglicht eine Automatisierung der Reinigung des Gehäuses.

Gemäß einem nicht beanspruchten weiteren Aspekt ist die mindestens eine nicht beanspruchte Gehäuse-Reinigungseinheit zum Reinigen einer Getriebelaterne der Schneckenmaschine ausgebildet. Vorzugsweise ist die mindestens eine Gehäuse-Reinigungseinheit in der Getriebelaterne fest angeordnet oder reversibel in die Getriebelaterne einführbar. Vorteilhaft wird hierdurch erreicht, dass auch die Getriebelaterne zuverlässig von Verschmutzungen befreit werden kann.

Die Schneckenmaschine weist vorzugsweise einen Zuführtrichter zum Zuführen, insbesondere zum Dosieren, eines mittels der Schneckenmaschine zu fördernden Mediums auf. Das Medium kann beispielsweise ein, insbesondere als Granulat vorliegendes, Kunststoffmedium sein. Die nicht beanspruchte Gehäuse-Reinigungsvorrichtung kann eine Trichter-Zuführeinrichtung zum Zuführen des Reinigungsmediums über den Zuführtrichter aufweisen. Die Trichter-Zuführeinrichtung kann zusammen mit der mindestens einen Gehäuse-Reinigungseinheit über eine gemeinsame Versorgungsvorrichtung mit dem Reinigungsmedium versorgt werden. Insbesondere stehen die Trichter-Zuführeinrichtung und die mindestens eine Reinigungseinheit in fluidleitender Verbindung mit derselben Versorgungsvorrichtung. Ein Zuführtrichter der Schneckenmaschine kann somit besonders zuverlässig und effizient gereinigt werden.

Eine nicht beanspruchte Gehäuse-Reinigungsvorrichtung, bei der die mindestens eine Gehäuse-Reinigungseinheit mindestens eine Gehäuse-Reinigungsdüse zum Ausbringen mindestens eines Reinigungsmediums aufweist, gewährleistet eine besonders zuverlässige Reinigung des Gehäuses. Vorzugsweise ist über die mindestens eine Gehäuse-Reinigungsdüse mehr als ein Reinigungsmedium ausbringbar. Vorzugsweise umfasst die mindestens eine Gehäuse-Reinigungseinheit mindestens zwei Gehäuse-Reinigungsdüsen, welche unterschiedliche Düsenformen aufweisen. Die Düsenform der mindestens einen Gehäuse-Reinigungsdüse kann rund, insbesondere kreisförmig oder schlitzförmig ausgebildet sein.

Die Trageinheit kann eine integrierte Leitung zum Führen des mindestens einen Reinigungsmediums aufweisen. Die Trageinheit kann hierzu als Hohlstab und/oder als Schlauch ausgebildet sein. Die mindestens eine Gehäuse-Reinigungsdüse kann mit der Trageinheit in fluidleitender Verbindung stehen. Die Gehäuse-Reinigungsvorrichtung ist somit besonders einfach handhabbar.

Eine nicht beanspruchte Gehäuse-Reinigungsvorrichtung, bei der die mindestens eine Gehäuse-Reinigungsdüse relativ zu der Trageinheit drehbar gelagert ist, gewährleistet eine besonders intensive Reinigung des Gehäuses. Die mindestens eine Gehäuse-Reinigungsdüse ist vorzugsweise drehantreibbar an der Trageinheit angebracht. Die mindestens eine Gehäuse-Reinigungsdüse kann motorisch angetrieben werden. Alternativ kann die mindestens eine Gehäuse-Reinigungsdüse durch die Strömung des Reinigungsmediums, insbesondere durch das Ausbringen des Reinigungsmediums, drehantreibbar sein. Hierzu kann die mindestens eine Gehäuse-Reinigungsdüse derart ausgebildet sein, dass beim Ausbringen des Reinigungsmediums ein Drehmoment um eine Gehäuse-Düsenachse bereitgestellt wird, um welche die mindestens eine Gehäuse-Reinigungsdüse drehbar gelagert ist.

Eine nicht beanspruchte Gehäuse-Reinigungsvorrichtung, bei der die mindestens eine Gehäuse-Reinigungseinheit mindestens ein mit der Trageinheit verbundenes Gehäuse-Kontaktreinigungselement zum berührenden Reinigen des Gehäuses aufweist, gewährleistet eine verbesserte Reinigung des Gehäuses. Das Gehäuse-Kontaktreinigungselement kann als Reinigungsbürste und/oder als Reinigungsschwamm und/oder als Reinigungskette zum Abschlagen hartnäckiger Verschmutzungen und/oder als Reinigungssieb zum Aussieben von Verschmutzungen aus dem Reinigungsmedium und/oder als Reinigungslappen und/oder als Abziehlippe, insbesondere zum trockenziehen befeuchteten Oberflächen, ausgebildet sein. Das als Reinigungsbürste ausgebildete Gehäuse-Kontaktreinigungselement kann als Vollbürste und/oder als spiralförmige Wendelbürste, insbesondere mit durchgängigem Bürstenkamm und/oder mit zueinander beabstandeten Bürstenbündeln, ausgebildet sein. Vorzugsweise ist das als Reinigungsbürste ausgebildete Gehäuse-Kontaktreinigungselement ähnlich den Schneckenelementen der Behandlungselementwelle ausgebildet. Die Reinigungsbürsten zueinander beabstandeter Trageinheiten sind vorzugsweise derart ausgebildet, dass diese beim Reinigen des Gehäuses einander abstreifend kontaktieren, insbesondere ineinandergreifen. Vorzugsweise ist das Gehäuse-Kontaktreinigungselement derart ausgebildet, dass die Reinigungsbürsten je nach Verschmutzungsgrad des Gehäuses kombinierbar sind, insbesondere modular und/oder reversibel mit der Trageinheit verbindbar sind. Beispielsweise kann für eine Förderzone des Gehäuses eine vergleichsweise weiche Reinigungsbürste verwendet werden, wohingegen für eine Aufschmelzzone des Gehäuses eine härtere Reinigungsbürste eingesetzt werden kann. Zum gleichzeitigen Reinigen sowohl der Förderzone als auch der Aufschmelzzone können die weichere und die härtere Bürste zueinander beabstandet an der Trageinheit befestigbar sein. Das mindestens eine Gehäuse-Kontaktreinigungselement kann einen Kunststoff und/oder ein Metall, insbesondere ein Buntmetall, insbesondere Messing und/oder Kupfer, aufweisen.

Gemäß einem nicht beanspruchten weiteren Aspekt ist das mindestens eine Gehäuse-Kontaktreinigungselement relativ zu der mindestens einen Trageinheit verlagerbar, insbesondere drehbar. Beispielsweise kann das mindestens eine Gehäuse-Kontaktreinigungselement als drehbare Reinigungswalze ausgebildet sein.

Gemäß einem nicht beanspruchten weiteren Aspekt weist die nicht beanspruchte Gehäuse-Reinigungsvorrichtung mindestens zwei Gehäuse-Kontaktreinigungselemente auf. Diese können um in Querrichtung zueinander beabstandete Achsen drehbar gelagert sein. Vorzugsweise sind die mindestens zwei Gehäuse-Kontaktreinigungselemente zueinander dichtkämmend und/oder einander durchdringend ausgebildet. Vorteilhaft wird hierdurch erreicht, dass sich die mindestens zwei Gehäuse-Kontaktreinigungselemente gegenseitig reinigen.

Gemäß einem nicht beanspruchten weiteren Aspekt der Erfindung weist die nicht beanspruchte Gehäuse-Reinigungsvorrichtung mindestens eine als Gehäuse-Reinigungsdüse ausgebildete Gehäuse-Reinigungseinheit und mindestens eine als Gehäuse-Kontaktreinigungselement ausgebildete Gehäuse-Reinigungseinheit auf. Vorzugsweise ist die mindestens eine Gehäuse-Reinigungsdüse entlang der Längsachse auf derselben Höhe angeordnet wie das mindestens eine Gehäuse-Kontaktreinigungselement.

Eine nicht beanspruchte Gehäuse-Reinigungsvorrichtung, bei der die Trageinheit einen Kupplungsabschnitt zum Verbinden mit einem Wellenantrieb der Schneckenmaschine aufweist, ist besonders kostengünstig herstellbar. Der Kupplungsabschnitt ist vorzugsweise zur drehmomentübertragenden Verbindung mit einer Laternenkupplung in der Getriebelaterne ausgebildet. Der Kupplungsabschnitt kann als Keilwellenverbindung ausgebildet sein. Die Gehäuse-Antriebseinrichtung kann vollständig durch den Wellenantrieb der Schneckenmaschine ausgebildet sein. Zusätzliche Komponenten zum Verlagern der Trageinheit und/oder der mindestens einen Gehäuse-Reinigungseinheit relativ zu dem Gehäuse können eingespart werden.

Gemäß einem nicht beanspruchten weiteren Aspekt sind der Kupplungsabschnitt und/oder die Laternenkupplung dazu ausgebildet, ein automatisches Erkennen der daran angeschlossenen Trageinheit und/oder der spezifischen Ausführung der Gehäuse-Reinigungsvorrichtung zu gewährleisten. Hierdurch wird ermöglicht, dass die Schneckenmaschine, insbesondere eine Steuereinrichtung der Schneckenmaschine, die Anbindung der Gehäuse-Reinigungsvorrichtung automatisch erkennt. Ein Reinigungsprogramm kann entsprechend der spezifischen Ausführung der Gehäuse-Reinigungsvorrichtung automatisch ausgewählt werden. Betriebsparameter der Schneckenmaschine können entsprechend voreingestellt, insbesondere aus Sicherheitsgründen limitiert, werden.

Eine nicht beanspruchte Gehäuse-Reinigungsvorrichtung, bei der die Trageinheit zur drehbaren Lagerung relativ zu dem Gehäuse ausgebildet ist, gewährleistet die besonders zuverlässige und intensive Reinigung des Gehäuses. Zum Drehantreiben der Trageinheit kann diese wie oben beschrieben mit dem Wellenantrieb und/oder der Gehäuse-Antriebseinrichtung drehmomentübertragend verbunden sein. Alternativ kann das zur Drehung benötigte Drehmoment durch Ausbringen des Reinigungsmediums über die mindestens eine Gehäuse-Reinigungsdüse bereitgestellt werden.

Eine nicht beanspruchte Gehäuse-Reinigungsvorrichtung mit mindestens einer Tragkupplung zum reversiblen Verbinden der mindestens einen Gehäuse-Reinigungseinheit mit der Trageinheit ist besonders flexibel einsetzbar und einfach zu warten. Dadurch, dass die mindestens eine Gehäuse-Reinigungseinheit an der Trageinheit mittels der mindestens einen Tragkupplung reversibel anbringbar ist, kann die mindestens eine Gehäuse-Reinigungseinheit entsprechend den Anforderungen an den jeweiligen Reinigungsprozess angepasst werden. Beispielsweise kann die mindestens eine Gehäuse-Reinigungseinheit derart ausgewählt werden, dass ihre Abmessungen ein einfaches Einführen in das Gehäuse und eine zuverlässige Reinigung des Gehäuses sicher gewährleisten. Insbesondere kann das mindestens eine mit der Trageinheit verbundene Gehäuse-Kontaktreinigungselement derart ausgebildet sein, dass es mit dem Gehäuse zuverlässig in Eingriff gelangt. Die mindestens eine Tragkupplung ist vorzugsweise werkzeuglos lösbar. Die mindestens eine Tragkupplung umfasst vorzugsweise eine mechanische Verbindung und/oder mindestens eine fluidleitende Verbindung zum Führen des mindestens einen Reinigungsmediums.

Eine nicht beanspruchte Gehäuse-Reinigungsvorrichtung mit einer Führungseinheit zum axialen Führen der Trageinheit an dem Gehäuse ist in dem Gehäuse besonders einfach und sicher verlagerbar. Durch Ausbilden der Gehäuse-Reinigungsvorrichtung mit der Führungseinheit kann ein Anschlagen der Gehäuse-Reinigungsvorrichtung an dem Gehäuse zuverlässig verhindert werden. Die Führungseinheit kann berührend oder berührungsfrei ausgebildet sein. Gemäß einem weiteren Aspekt kann die Führungseinheit durch das Gehäuse-Kontaktreinigungselement insbesondere als Reinigungsbürste ausgebildet sein. Das Gehäuse-Kontaktreinigungselement, insbesondere die Reinigungsbürste, können zum, insbesondere konzentrischen, Führen der Gehäuse-Reinigungsvorrichtung in dem Gehäuse ausgebildet sein. Die berührend ausgebildete Führungseinheit kann einen Führungskörper zum mechanischen Führen der Gehäuse-Reinigungsvorrichtung, insbesondere der Trageinheit, in dem Gehäuse aufweisen. Der Führungskörper weist vorzugsweise eine zentrale Ausnehmung auf, welche von der Trageinheit durchdrungen wird. Der Führungskörper kann scheibenförmig und/oder sternförmig ausgebildet sein. Vorzugsweise weist der Führungskörper Abflussausnehmungen auf, durch welche das mindestens eine Reinigungsmedium entlang der Längsachse abfließen kann.

Die nicht beanspruchte berührungsfrei ausgebildete Führungseinheit gewährleistet das Führen der Trageinheit durch Ausbringen des mindestens einen Reinigungsmediums. Die Führungseinheit kann hierzu Führungsdüsen zum Ausbringen des Reinigungsmediums aufweisen. Die Führungsdüsen können als Gehäuse-Reinigungsdüsen ausgebildet sein. Durch die berührungsfreie Führung der Trageinheit in dem Gehäuse wird die mechanische Beanspruchung der Innenwand reduziert. Beschädigungen des Gehäuses können zuverlässig verhindert werden.

Eine nicht beanspruchte Gehäuse-Reinigungsvorrichtung, bei der die Trageinheit modular ausgebildet ist und hierzu mindestens zwei entlang einer Längsachse der Trageinheit miteinander reversibel verbindbare Tragmodule aufweist, ist besonders flexibel und kostengünstig betreibbar. Die reversibel miteinander verbindbaren Tragmodule können unterschiedliche Abmessungen aufweisen. Insbesondere können die Tragmodule unterschiedliche Gehäuse-Reinigungseinheiten aufweisen. Die Möglichkeit zum Austausch einzelner Tragmodule ermöglicht eine Anpassung der Gehäuse-Reinigungsvorrichtung an die jeweiligen Reinigungsanforderungen sowie den verschleißbedingten Austausch einzelner Tragmodule.

Gemäß einem nicht beanspruchten weiteren Aspekt kann die Trageinheit mindestens ein von einem Haupttragmodul abzweigendes Zweig-Tragmodul aufweisen.

Eine nicht beanspruchte Gehäuse-Reinigungsvorrichtung, bei der die Trageinheit ein Verstellelement aufweist, welches derart ausgebildet ist, dass die mindestens eine Gehäuse-Reinigungseinheit mit einstellbarem Abstand quer zu einer Längsachse der Trageinheit an der Trageinheit anordenbar ist, ist besonders flexibel einsetzbar. Die Gehäuse-Reinigungsvorrichtung mit der quer zu der Längsachse beabstandet angeordneten Gehäuse-Reinigungseinheit, wobei der Abstand zwischen der Längsachse und der Gehäuse-Reinigungseinheit einstellbar ist, ist flexibel für Gehäuse mit unterschiedlichem Innendurchmesser einsetzbar. Vorzugsweise sind an der Trageinheit mindestens zwei, insbesondere einander diametral gegenüberliegende, Gehäuse-Reinigungseinheiten mit einstellbarem Abstand quer zu der Längsachse an der Trageinheit anordenbar. Vorteilhaft wird hierdurch erreicht, dass mehrere Gehäusebohrungen einer Schneckenmaschine gleichzeitig reinigbar sind. Die mindestens zwei Gehäuse-Reinigungseinheiten sind vorzugsweise derart an der Trageinheit anordenbar, dass ein Abstand zwischen diesen einem Abstand zwischen den Mittellängsachsen der Gehäusebohrungen entspricht. Die Gehäuse-Reinigungsvorrichtung ist somit zum effizienten Reinigen von Mehrwellen-Schneckenmaschinen ausgebildet.

Gemäß einem nicht beanspruchten weiteren Aspekt ist die nicht beanspruchte Gehäuse-Reinigungsvorrichtung zum nichtrotationssymmetrischen Reinigen des Gehäuses ausgebildet. Hierdurch wird die Reinigung, insbesondere mehrerer Gehäusebohrungen, einer Mehrwellen-Schneckenmaschine auf effiziente Weise ermöglicht.

Eine nicht beanspruchte Gehäuse-Reinigungsvorrichtung, bei der die mindestens eine Gehäuse-Reinigungseinheit zum Fördern von Verschmutzungen entlang einer Längsachse der Trageinheit ausgebildet ist, gewährleistet den zuverlässigen Transport des mindestens einen Reinigungsmediums in dem Gehäuse. Zum Fördern der Verschmutzungen entlang der Längsachse kann die mindestens eine Gehäuse-Reinigungsdüse eine zumindest anteilig in Richtung der Längsachse, insbesondere in Richtung eines Ablaufs, insbesondere der Ausbringöffnung, orientierte Sprührichtung aufweisen. Die mindestens eine Gehäuse-Reinigungsdüse kann auch entgegen einer Förderrichtung der Schneckenmaschine orientiert sein. Hierdurch können Verschmutzungen effizient eingeweicht werden. Mindestens eine Gehäuse-Reinigungsdüse ist vorzugsweise quer zu einer Längserstreckung der Trageinheit orientiert, um Verschmutzungen von dem Gehäuse zuverlässig zu lösen. Gemäß einem weiteren Aspekt ist das mindestens eine Gehäuse-Kontaktreinigungselement, insbesondere die Reinigungsbürste und/oder die Abziehlippe, spiralförmig, insbesondere mit fördernder Steigung, ausgebildet. Das spiralförmige Gehäuse-Kontaktreinigungselement weist vorzugsweise mindestens einen, insbesondere mindestens zwei, insbesondere mindestens drei, Gewindegänge auf. Beim Drehen des mindestens einen Gehäuse-Kontaktreinigungselements kann hierdurch das Reinigungsmedium, insbesondere in Richtung eines Ablaufs, insbesondere der Ausbringöffnung, gefördert werden.

Vorzugsweise ist die nicht beanspruchte mindestens eine Gehäuse-Reinigungseinheit, insbesondere das Gehäuse-Kontaktreinigungselement und/oder die Gehäuse-Reinigungsdüse zum Verlagern, insbesondere zum linearen Verlagern und/oder zum Rotieren, der Gehäuse-Reinigungsvorrichtung relativ zu dem Gehäuse der Schneckenmaschine ausgebildet. Beispielsweise kann die Gehäuse-Reinigungsdüse derart orientiert sein, dass der über diese Gehäuse-Reinigungsdüse ausgebrachte Fluidmassenstrom einen Impuls zum Verlagern der Gehäuse-Reinigungsvorrichtung relativ zu dem Gehäuse bewirkt. Das Gehäuse-Kontaktreinigungselement kann derart ausgebildet sein, dass das Verlagern der Gehäuse-Reinigungsvorrichtung mittels der Gehäuse-Antriebseinrichtung aufgrund des Kontaktierens des Gehäuse-Kontaktreinigungselements mit dem Gehäuse Verlagern der Gehäuse-Reinigungsvorrichtung relativ zu dem Gehäuse bewirkt. Beispielsweise kann die Gehäuse-Reinigungseinheit hierzu schräg orientierte Reinigungsbürsten und/oder in Verlagerungsrichtung orientierte Gehäuse-Reinigungsdüsen umfassen.

Eine nicht beanspruchte Gehäuse-Reinigungsvorrichtung mit einer Gehäuse-Steuereinrichtung zum automatisierten Steuern einer Verlagerung der Trageinheit relativ zu dem Gehäuse und/oder eines Massenstroms mindestens eines in das Gehäuse eingeleiteten Reinigungsmediums ist besonders wirtschaftlich betreibbar. Die Gehäuse-Steuereinrichtung kann zum Steuern des Massenstroms des über die mindestens eine Gehäuse-Reinigungsdüse ausgebrachten Reinigungsmediums mit dem mindestens einen Zuflussventil und dem mindestens einen Abflussventil in Signalverbindung stehen. Ferner kann die Gehäuse-Steuereinrichtung zum automatisierten Verlagern der Trageinheit relativ zu dem Gehäuse mit der Gehäuse-Antriebseinrichtung in Signalverbindung stehen. Die Gehäuse-Steuereinrichtung kann auch mit einem Antrieb des mindestens einen Gehäuse-Kontaktreinigungselements und/oder einer Pumpe zum Fördern des Reinigungsmediums in Signalverbindung stehen. Die Reinigung des Gehäuses kann somit besonders kosten- und zeiteffizient erfolgen.

Der Erfindung liegt ferner die Aufgabe zugrunde, ein Reinigungssystem für eine Schneckenmaschine zu schaffen, das flexibel für unterschiedliche Schneckenmaschinen einsetzbar ist und eine besonders gründliche Reinigung der Schneckenmaschine gewährleistet.

Diese Aufgabe wird durch ein Reinigungssystem mit den Merkmalen des Anspruchs 5 gelöst. Das Reinigungssystem kann zusätzlich eine Gehäuse-Reinigungsvorrichtung aufweisen. Die Vorteile des erfindungsgemäßen Reinigungssystems entsprechen den Vorteilen der bereits beschriebenen Gehäuse-Reinigungsvorrichtung und der Wellen-Reinigungsvorrichtung. Durch die Ausbildung des Reinigungssystems mit der Versorgungsvorrichtung kann die Bereitstellung des mindestens einen Reinigungsmediums zuverlässig gewährleistet werden. Schnittstellenprobleme können zuverlässig verhindert werden.

Gemäß einem Aspekt der Erfindung ist die Versorgungsvorrichtung zum Bereitstellen von mindestens zwei Reinigungsmedien ausgebildet. Vorzugsweise unterscheiden sich mindestens zwei, insbesondere mindestens drei, insbesondere mindestens vier, der Reinigungsmedien in ihrer Zusammensetzung. Ferner kann die Versorgungsvorrichtung dazu ausgebildet sein, einen Druck und/oder eine Temperatur des mindestens einen Reinigungsmediums zu steuern. Insbesondere kann die Versorgungsvorrichtung zum Bereitstellen mindestens eines der oben beschriebenen Reinigungsmedien ausgebildet sein.

Vorzugsweise ist die Versorgungsvorrichtung als Kreislauf-Versorgungsvorrichtung ausgebildet. Die Kreislauf-Versorgungsvorrichtung ist dadurch gekennzeichnet, dass das mindestens eine Reinigungsmedium der Gehäuse-Reinigungsvorrichtung und/oder der Wellen-Reinigungsvorrichtung zyklisch zugeführt wird. Eine derartige Versorgungsvorrichtung ist besonders wirtschaftlich und umweltschonend betreibbar.

Die Versorgungsvorrichtung kann zum mechanischen und/oder chemischen und/oder biologischen Aufbereiten des Reinigungsmediums ausgebildet sein. Insbesondere kann die Versorgungsvorrichtung zum Aufbereiten des Reinigungsmediums eine Reinigungseinheit, insbesondere einen Filter und/oder einen Ölabscheider und/oder ein Reinigungselement zum chemischen Reinigen, aufweisen. Hierdurch können Verschmutzungen aus dem mindestens einen Reinigungsmedium entfernt werden.

Ein Reinigungssystem nach Anspruch 6 kann besonders wirtschaftlich betrieben werden. Der Verschmutzungssensor kann beispielsweise als optischer Sensor und/oder als Leitfähigkeitssensor und/oder als pH-Wert-Sensor und/oder als Viskositätssensor und/oder als Drucksensor und/oder als Strömungssensor, insbesondere als Strömungsgeschwindigkeitssensor, ausgebildet sein. Mittels des pH-Wert-Sensors kann ermittelt werden, wie stark das Reinigungsmedium basisch oder sauer ist. Eine Zufuhr von basen- oder säurehaltigen Reinigungsmitteln zu dem Reinigungsmedium kann mit Kenntnis des pH-Werts mittels der Versorgungsvorrichtung gesteuert und/oder geregelt werden. Anhand von Viskositätswerten und/oder Druckwerten und/oder Strömungswerten des Reinigungsmediums kann die Versorgungsvorrichtung eine Flüssigkeitszufuhr und/oder die Förderung des Reinigungsmediums, insbesondere den Betrieb einer Förderpumpe, steuern und/oder regeln. Ferner kann die Versorgungsvorrichtung zum Abgleich der mittels des Verschmutzungssensors ermittelten Messwerte mit Grenzwerten ausgebildet sein, um beim Überschreiten der Grenzwerte eine Schutzfunktion, insbesondere eine Warnfunktion und/oder eine Abschaltfunktion, auszuführen. Vorzugsweise ist der Verschmutzungssensor in einem Eintrittsbereich der Versorgungsvorrichtung angeordnet, in dem das Reinigungsmedium ungereinigt ist. Der Verschmutzungssensor kann auch an einem Abfluss der Gehäuse-Reinigungsvorrichtung und/oder der Wellen-Reinigungsvorrichtung angeordnet sein. Hierdurch kann besonders zuverlässig auf den Verschmutzungszustand der Schneckenmaschine rückgeschlossen werden. Alternativ kann der Verschmutzungssensor stromaufwärts der Versorgungsvorrichtung angeordnet sein. Hierdurch kann auf die Schmutzbelastung des Reinigungsmediums rückgeschlossen werden. Die Versorgungsvorrichtung kann auch mehrere Verschmutzungssensoren aufweisen. Die Versorgungsvorrichtung kann dazu ausgebildet sein, anhand des Messwerts einen Austausch des Reinigungsmediums zu gewährleisten.

Ein Reinigungssystem nach Anspruch 7 gewährleistet eine zuverlässige Reinigung der Schneckenmaschine und ist besonders wirtschaftlich betreibbar. Vorzugsweise steht die Steuervorrichtung in Signalverbindung mit der Gehäuse-Steuereinrichtung und/oder mit der Wellen-Steuereinrichtung. Die Reinigungsfunktionen können beispielsweise bestimmte Verlagerungsbewegungen der Trageinheit und/oder der mindestens einen Gehäuse-Reinigungseinheit relativ zu dem Gehäuse und/oder der Behandlungselementwelle relativ zu der Reinigungskammer und/oder der mindestens einen Wellen-Reinigungseinheit, umfassen. Ferner können diese bestimmte Abfolgen zum Ausbringen des mindestens einen Reinigungsmediums, insbesondere unter bestimmten Drücken und/oder Temperaturen umfassen. Insbesondere können die Reinigungsfunktionen zum Ausbringen unterschiedlicher, insbesondere unterschiedlich kombinierter Reinigungsmedien, ausgebildet sein. Die Reinigung kann in Abhängigkeit des Verschmutzungsgrads des Reinigungsmediums beendet werden, so dass eine optimale Reinigungsdauer erzielt wird.

Der Erfindung liegt ferner die Aufgabe zugrunde, ein Verfahren zum Reinigen einer Schneckenmaschine zu schaffen, welches zur flexiblen Reinigung unterschiedlicher Schneckenmaschinen anwendbar ist und eine besonders zuverlässige und wirtschaftliche Reinigung der Schneckenmaschine gewährleistet.

Diese Aufgabe wird durch ein Verfahren mit den Merkmalen des Anspruchs 8 gelöst. Es kann zusätzlich eine Gehäuse-Reinigungsvorrichtung bereitgestellt und das Gehäuse gereinigt werden, wobei die mindestens eine Behandlungselementwelle außerhalb des Gehäuses angeordnet ist. Die Vorteile des erfindungsgemäßen Verfahrens entsprechen den Vorteilen der bereits beschriebenen Gehäuse-Reinigungsvorrichtung, der Wellen-Reinigungsvorrichtung und des Reinigungssystems.

Gemäß einem Aspekt der Erfindung kann das Gehäuse und/oder die mindestens eine Behandlungselementwelle eingeweicht werden. Hierzu wird das Reinigungsmedium mit flüssigen Bestandteilen auf der Behandlungselementwelle und/oder auf die Innenwand des Gehäuses ausgebracht. Insbesondere nach einer bestimmten Einwirkdauer, kann das Reinigen des Gehäuses und/oder der mindestens einen Behandlungselementwelle erfolgen. Vorteilhaft wird hierdurch erreicht, dass auch besonders stark anhaftende Verschmutzungen zuverlässig gelöst werden können.

Gemäß einem Aspekt der Erfindung werden das Gehäuse und/oder die Reinigungskammer beheizt. Das Beheizen erfolgt vorzugsweise während des Einweichens und/oder des Reinigens. Hierdurch kann das Reinigungsergebnis nochmals verbessert werden.

Das Reinigen des Gehäuses und/oder der mindestens einen Behandlungselementwelle kann mittels der mindestens einen Gehäuse-Reinigungseinheit und/oder der mindestens einen Wellen-Reinigungseinheit erfolgen.

Ein Verfahren nach Anspruch 9 bis 11 gewährleistet eine zuverlässige und wirtschaftliche Reinigung der Schneckenmaschine. Zusätzlich kann das mindestens eine Reinigungsmedium über die mindestens eine Gehäuse-Reinigungsdüse ausgebracht werden. Vorzugsweise wird eine Dauer des Reinigungsprozesses in Abhängigkeit von dem Messwert, insbesondere einer Änderung des Messwerts, bestimmt. Die Reinigungsintensität und/oder der Reinigungsaufwand können somit abhängig von dem tatsächlichen Verschmutzungszustand der Schneckenmaschine gesteuert werden.

Das Gehäuse und/oder die Behandlungselementwelle können vollständig trocken, also ohne flüssige Reinigungsmedien, gereinigt werden.

Gemäß einem weiteren Aspekt erfolgt das Reinigen des Gehäuses bei zumindest 20 %, insbesondere mindestens 40 %, insbesondere mindestens 60 %, insbesondere mindestens 80 %, insbesondere vollständiger, Befüllung des Gehäuses mit dem mindestens einen, insbesondere flüssigen, Reinigungsmedium.

Gemäß einem weiteren Aspekt wird die Trageinheit ausschließlich aufgrund des Stroms des über die mindestens eine Gehäuse-Reinigungsdüse ausgebrachten Reinigungsmediums, insbesondere entlang der Längsachse, verlagert.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung eines nicht beanspruchten Reinigungssystems mit einer Gehäuse-Reinigungsvorrichtung zum Reinigen eines Gehäuses einer Schneckenmaschine und einer Versorgungsvorrichtung, wobei die Gehäuse-Reinigungsvorrichtung eine Gehäuse-Reinigungseinheit mit Gehäuse-Reinigungsdüsen aufweist,
- Fig. 2: eine schematische Darstellung eines nicht beanspruchten Reinigungssystems mit einer weiteren Gehäuse-Reinigungsvorrichtung, wobei die Gehäuse-Reinigungsvorrichtung eine Gehäuse-Reinigungseinheit mit einem Gehäuse-Kontaktreinigungselement aufweist,
- Fig. 3: eine schematische Darstellung eines nicht beanspruchten Reinigungssystems mit einer weiteren Gehäuse-Reinigungsvorrichtung, wobei die Gehäuse-Reinigungsvorrichtung eine Trageinheit mit einem Kupplungsabschnitt zum Verbinden mit einer Antriebseinrichtung aufweist,
- Fig. 4: eine nicht beanspruchte weitere Gehäuse-Reinigungsvorrichtung, die zum Reinigen eines Gehäuses einer Mehrwellen-Schneckenmaschine zwei radial zu einer Längsachse der Trageinheit beabstandete Gehäuse-Reinigungseinheiten aufweist und
- Fig. 5: eine schematische Darstellung einer erfindungsgemäßen Wellen-Reinigungsvorrichtung, wobei die Wellen-Reinigungsvorrichtung zum Reinigen einer Behandlungselementwelle der Schneckenmaschine ausgebildet ist.

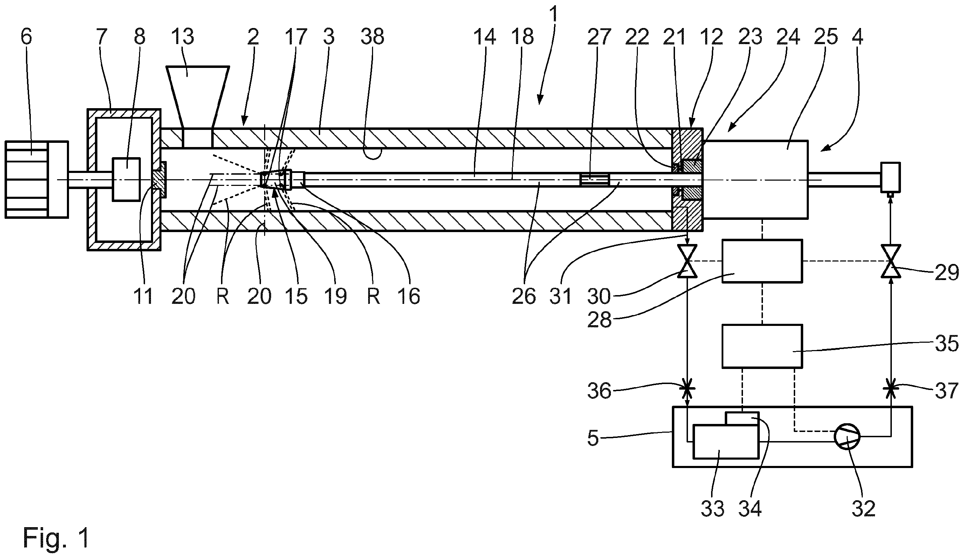

Anhand der Fig. 1 ist ein Reinigungssystem 1 für eine Schneckenmaschine 2 beschrieben. Das Reinigungssystem 1 ist zum Reinigen eines Verfahrensteils der Schneckenmaschine 2, insbesondere eines Gehäuses 3 der Schneckenmaschine 2, ausgebildet. Das Reinigungssystem 1 umfasst hierzu eine Gehäuse-Reinigungsvorrichtung 4 und eine Versorgungseinrichtung 5 zum Bereitstellen eines Reinigungsmediums R.

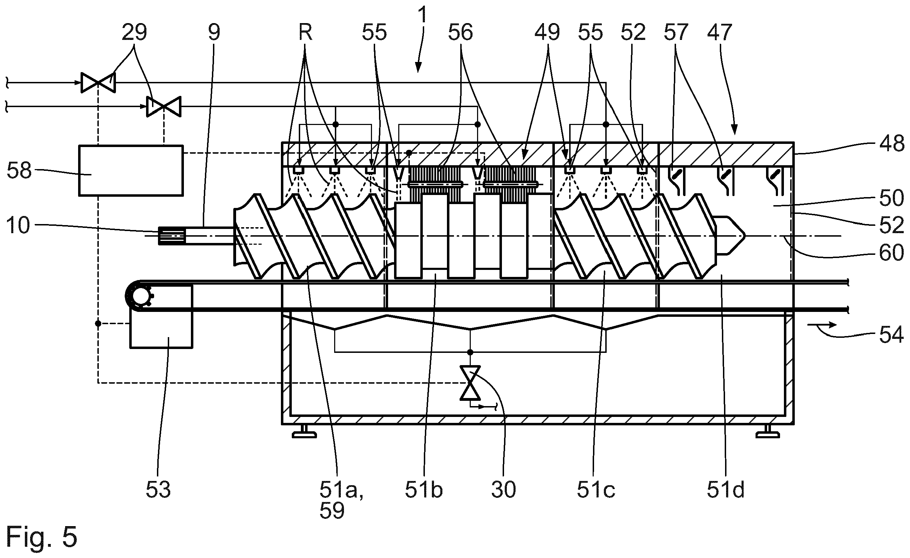

Die Schneckenmaschine 2 weist einen Wellenantrieb 6 auf. Der Wellenantrieb 6 umfasst ein Antriebsgetriebe. Das Antriebsgetriebe des Wellenantriebs 6 ist mit einer Getriebelaterne 7 in Verbindung. Die Getriebelaterne 7 umfasst eine Laternenkupplung 8 zum reversiblen, drehmomentübertragenden Verbinden einer Antriebswelle des Antriebsgetriebes mit einer in der Fig. 5 dargestellten Behandlungselementwelle 9. Die Schneckenmaschine 2 weist eine nicht dargestellte zweite Behandlungselementwelle auf, welche über eine zweite Laternenkupplung und eine zweite Antriebswelle des Antriebsgetriebes drehantreibbar ist. Die Behandlungselementwellen 9 sind zur drehmomentübertragenden Verbindung mit den Antriebswellen mit einem Wellenkupplungsabschnitt 10 ausgebildet. Zum Reinigen der Schneckenmaschine sind die Behandlungselementwellen 9 aus dem Gehäuse 3 entnommen.

Das Gehäuse 3 ist auf Seiten der Getriebelaterne 7 mittels einer Laternendichtung 11 fluiddicht verschlossen. Eine der Getriebelaterne 7 gegenüberliegende Ausbringöffnung des Gehäuses 3 ist mittels einer Verschließeinheit 12 abgedichtet. Zum Zuführen eines mittels der Schneckenmaschine 2 zu führenden Mediums weist das Gehäuse 3 einen Zuführtrichter 13 auf.

Die Gehäuse-Reinigungsvorrichtung 4 weist eine Trageinheit 14 und eine Gehäuse-Reinigungseinheit 15 auf. Die Trageinheit 14 ist als starre Tragstange ausgebildet. Die Gehäuse-Reinigungseinheit 15 ist mittels einer Tragkupplung 16 reversibel mit der Trageinheit 14 verbindbar. Insbesondere kann die Gehäuse-Reinigungseinheit 15 werkzeuglos von der Trageinheit 14 abgenommen werden.

Die Gehäuse-Reinigungseinheit 15 umfasst mehrere Gehäuse-Reinigungsdüsen 17 zum Ausbringen des Reinigungsmediums R. Zum Zuleiten des Reinigungsmediums R zu der Gehäuse-Reinigungseinheit 15 umfasst die Trageinheit 14 einen nicht dargestellten Fluidkanal.

Die Gehäuse-Reinigungseinheit 15 ist relativ zu der Trageinheit 14 drehbar an dieser angebracht. Insbesondere ist die Gehäuse-Reinigungseinheit 15 um eine Längsachse 18 der Trageinheit 14 drehbar gelagert. Einzelne der Gehäuse-Reinigungsdüsen 17 sind derart ausgebildet, dass diese relativ zu einem Gehäuse-Düsengrundkörper 19 drehbar gelagert sind. Insbesondere sind diese Gehäuse-Reinigungsdüsen 17 um Gehäuse-Düsenachsen 20 drehbar gelagert.

Die Verschließeinheit 12 weist eine Trageinheit-Durchführung 21 auf. Zum fluiddichten Verschließen des Gehäuses 3 umfasst die Verschließeinheit 12 eine Durchführungsdichtung 22, welche mit der Trageinheit 14 zusammenwirkt. Zum Führen der Trageinheit 14 umfasst die Verschließeinheit 12 eine Durchführungslagerung 23. Die Durchführungslagerung 23 ist Teil einer Führungseinheit 24 zum axialen Führen der Trageinheit 14 in dem Gehäuse 3. Auf Seiten der Gehäuse-Reinigungseinheit 15 ist die Führungseinheit 24 berührungslos ausgebildet. Die axiale Führung der Trageinheit 14 in dem Gehäuse 3 wird hierbei durch Ausbringen des Reinigungsmediums R gewährleistet. Hierdurch stützt sich die Gehäuse-Reinigungseinheit 15 berührungslos an dem Gehäuse 3 ab.

Einige der Gehäuse-Reinigungsdüsen 17 weisen eine Orientierung in Richtung der Verschließeinheit 12 auf. Hierdurch wird ein Fördern des Reinigungsmediums R und von Verschmutzungen entlang der Längsachse 18 in Richtung der Verschließeinheit 12 gewährleistet. Die Gehäuse-Reinigungsvorrichtung 4 weist eine Gehäuse-Antriebseinrichtung 25 auf. Die Gehäuse-Antriebseinrichtung 25 steht mit der Trageinheit 14 zum translatorischen und rotatorischen Verlagern relativ zu dem Gehäuse 3 in Wirkverbindung. Insbesondere ist die Trageinheit 14 mittels der Gehäuse-Antriebseinrichtung 25 entlang der Längsachse 18 verlagerbar und um diese drehbar. Die Gehäuse-Antriebseinrichtung 25 weist hierzu nicht dargestellte Elektromotoren auf.

Die Trageinheit 14 weist reversibel miteinander verbindbare Tragmodule 26 auf. Die Tragmodule 26 sind mittels einer Modulkupplung 27 miteinander verbunden.

Die Gehäuse-Reinigungseinrichtung 4 umfasst ferner eine Gehäuse-Steuereinrichtung 28 zum automatisierten Steuern der Verlagerung der Trageinheit 14 relativ zu dem Gehäuse 3 und zum Steuern eines Massenstroms des über die Gehäuse-Reinigungsdüsen 17 ausgebrachten Reinigungsmediums R. Hierzu steht die Gehäuse-Steuerungseinrichtung 28 in Signalverbindung mit der Gehäuse-Antriebseinrichtung 25. Ferner steht die Gehäuse-Steuereinrichtung 28 in Signalverbindung mit einem Zuflussventil 29 und einem Abflussventil 30 der Gehäuse-Reinigungsvorrichtung 4. Das Zuflussventil 29 steht mit der Trageinheit 14 in fluidleitender Verbindung und das Abflussventil 30 steht mit einer Abflussleitung 31 der Verschließeinheit 12 in fluidleitender Verbindung.

Die Gehäuse-Reinigungsvorrichtung 4 steht mit der Versorgungsvorrichtung 5 in Verbindung. Die Versorgungsvorrichtung 5 weist eine Pumpe 32 und eine Aufbereitungseinrichtung 33 auf. Die Pumpe 32 ist zum Abpumpen des Reinigungsmediums R aus dem Gehäuse 3 und zum Bereitstellen eines Förderdrucks zum Ausbringen des Reinigungsmediums R über die Gehäuse-Reinigungsdüsen 17 ausgebildet.

Die Aufbereitungseinrichtung 33 umfasst eine nicht dargestellte Filtereinheit zum Ausfiltern von Schmutzpartikeln aus dem Reinigungsmedium R. An der Aufbereitungseinrichtung 33 ist ein Verschmutzungssensor 34 angeordnet. Der Verschmutzungssensor 34 ist dazu ausgebildet, einen mit einem Verschmutzungsgrad des Reinigungsmediums R korrelierenden Messwert zu erfassen.

Die Pumpe 32 und der Verschmutzungssensor 34 stehen mit einer Steuervorrichtung 35 des Reinigungssystems 1 in Signalverbindung. Die Steuervorrichtung 35 ist zum automatisierten Steuern unterschiedlicher Reinigungsfunktionen und einer Reinigungsdauer ausgebildet. Die Steuervorrichtung 35 steht hierzu auch in Signalverbindung mit der Gehäuse-Steuereinrichtung 28. Zum Verbinden mit der Gehäuse-Reinigungsvorrichtung 4 weist die Versorgungsvorrichtung 5 eine Abflusskupplung 36 und eine Zuflusskupplung 37 auf.

Die Funktionsweise des Reinigungssystems 1 bzw. der Gehäuse-Reinigungsvorrichtung 4 zum Reinigen des Gehäuses 3 der Schneckenmaschine 2 ist wie folgt:
Im Förderbetrieb wird die Schneckenmaschine 2 über den Zuführtrichter 13 mit dem zu fördernden Medium beaufschlagt. Die Behandlungselementwellen 9 sind in dem Gehäuse 3 angeordnet und über die Laternenkupplung 8 der Getriebelaterne 7 mit dem Wellenantrieb 6 drehantreibbar verbunden. Durch Drehantreiben der Behandlungselementwellen 9 wird ein Medium zwischen einer Zuführöffnung des Gehäuses 3 und der Ausbringöffnung gefördert. Teile des zu fördernden Mediums haften dabei an dem Gehäuse 3 sowie an den Behandlungselementwellen 9 an und verschmutzen diese.

Zum Reinigen des Gehäuses 3 wird eine nicht dargestellte Austragseinheit von der Schneckenmaschine 2 entfernt und die Behandlungselementwellen 9 werden aus dem Gehäuse 3 entnommen.

Die Gehäuse-Reinigungseinheit 15 wird an dem Gehäuse 3 angeordnet. Die Verschließeinheit 12 wird anstelle der Austragseinheit dichtend mit dem Gehäuse 3 verbunden. Durch die Verschließeinheit 12 ragt die Trageinheit 14 und ist mittels der Durchführungslagerung 23 entlang der Längsachse 18 relativ zu dieser verlagerbar. Die Gehäuse-Reinigungseinheit 15 ist an der Trageinheit 14 angebracht und im Bereich der Verschließeinheit 12 angeordnet. Die Getriebelaterne 7 ist mittels der Laternendichtung 11 fluiddicht verschlossen. Über die Abflusskupplung 36 und die Zuflusskupplung 37 ist die Gehäuse-Reinigungsvorrichtung 4 fluidleitend mit der Versorgungsvorrichtung 5 verbunden.

Der Reinigungsprozess wird durch ein Steuersignal der Steuervorrichtung 35 gestartet. Die Pumpe 32 wird aktiviert und das Reinigungsmedium R wird in Form einer Reinigungsflüssigkeit RF unter Druck an dem Zuflussventil 29 bereitgestellt. Auf ein Signal der Steuervorrichtung 35 werden mittels der Gehäuse-Steuereinrichtung 28 das Zuflussventil 29 und das Abflussventil 30 geöffnet. Das Reinigungsmedium R gelangt über die Trageinheit 14 zu der Gehäuse-Reinigungseinheit 15. Über die Gehäuse-Reinigungsdüsen 17 wird das Reinigungsmedium R in dem Gehäuse 3 ausgebracht. Bedingt durch das ausgebrachte Reinigungsmedium R rotieren die Gehäuse-Reinigungsdüsen 17 um die Gehäuse-Drehachsen 20. Das Reinigungsmedium R wird somit besonders gleichmäßig über eine Innenwand 38 des Gehäuses 3 verteilt.

Der Abfluss des Reinigungsmediums R über die Abflussleitung 31 wird durch die in Richtung der Verschließeinheit 12 orientierten Gehäuse-Reinigungsdüsen 17 unterstützt. Das in dem Gehäuse 3 ausgebrachte Reinigungsmedium R gelangt über die Abflussleitung 31 und das Abflussventil 30 sowie die Abflusskupplung 36 zurück in die Versorgungsvorrichtung 5.

Die Steuervorrichtung 35 stellt ein Signal zum Verlagern der Trageinheit 14 relativ zu dem Gehäuse 3 bereit. Mittels der Gehäuse-Steuereinrichtung 28 wird die Gehäuse-Antriebseinrichtung 25 aktiviert. Von der Gehäuse-Antriebseinrichtung 25 wird eine Vorschubbewegung auf die Trageinheit 14 übertragen. Gleichzeitig wird von der Gehäuse-Antriebseinrichtung 25 eine Drehbewegung um die Längsachse 18 auf die Trageinheit 14 übertragen. Die Gehäuse-Reinigungseinheit 15 wird um die Längsachse 18 rotierend in Richtung der Getriebelaterne 7 verlagert.

Entsprechend eines in der Steuervorrichtung 35 hinterlegten Steuerprogramms werden unterschiedliche Reinigungsfunktionen durchgeführt, wobei die Gehäuse-Reinigungseinheit 15 entlang der Längsachse wechselweise verlagert wird und wobei der von der Pumpe 32 bereitgestellte Druck zum Ausbringen des Reinigungsmediums R über die Gehäuse-Reinigungsdüsen 17 variiert wird.

In der Reinigungsvorrichtung 5 wird das Reinigungsmedium R zunächst in die Aufbereitungseinrichtung 33 geleitet. In der Aufbereitungseinrichtung 33 werden die aus dem Gehäuse 3 ausgespülten Schmutzpartikel ausgefiltert. Das von den Schmutzpartikeln befreite Reinigungsmedium wird von der Pumpe 32 angesaugt.

Mittels des Verschmutzungssensors 34 wird ein mit dem Verschmutzungsgrad des Reinigungsmediums R korrelierender Messwert erfasst. Anhand des Messwerts wird ein Verschmutzungszustand des Gehäuses 3 bestimmt. Der Reinigungsprozess, insbesondere eine Reinigungsintensität und -dauer wird anhand des Verschmutzungszustands, insbesondere des Messwerts gesteuert.

Nach Beendigung des Reinigungsprozesses wird die Pumpe 32 deaktiviert. Die Gehäuse-Reinigungsvorrichtung 4 wird von der Schneckenmaschine 2 entfernt. Die Behandlungselementwellen 9 werden in das Gehäuse 3 eingeführt und mit der jeweiligen Laternenkupplung 8 verbunden. Der Spritzkopf wird wieder an dem Gehäuse 3 angebracht. Die Schneckenmaschine 2 steht für die Wiederinbetriebnahme bereit.

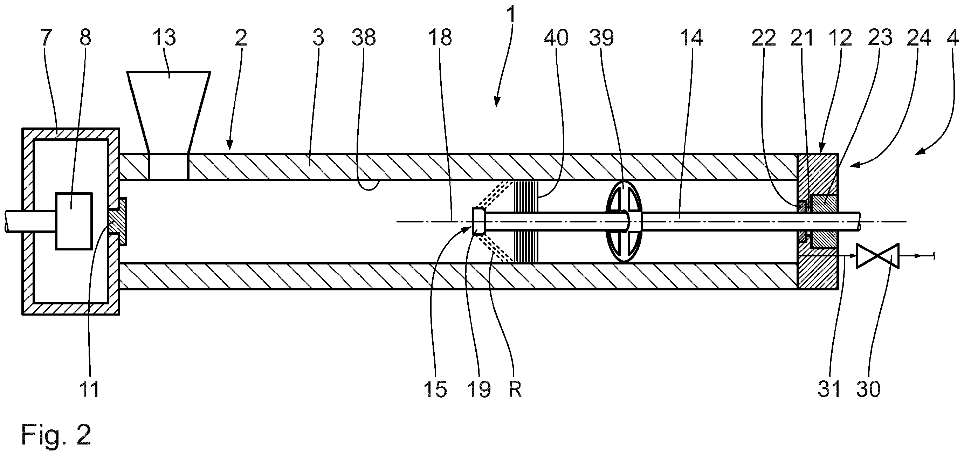

Anhand der Fig. 2 ist ein weiteres Reinigungssystem 1 bzw. eine weitere Gehäuse-Reinigungsvorrichtung 4 beschrieben. Im Unterschied zu dem Beispiel umfasst die Führungseinheit einen an der Trageinheit 14 angebrachten Führungskörper 39. Der Führungskörper 39 ist scheibenförmig ausgebildet. Die Trageinheit 14 durchdringt den Führungskörper 39 mittig und ist fest mit diesem verbunden. Der Führungskörper 39 ist entlang der Längsachse 18 verschiebbar an der Innenwand 38 gelagert.

Die Gehäuse-Reinigungseinheit 15 umfasst zusätzlich zu den Gehäuse-Reinigungsdüsen 17 ein Gehäuse-Kontaktreinigungselement 40. Das Gehäuse-Kontaktreinigungselement 40 ist als Reinigungsbürste ausgebildet.

Die Funktionsweise des Reinigungssystems 1 gemäß Fig. 2 entspricht der Funktionsweise des Reinigungssystems 1 gemäß Fig. 1. Beim Verlagern der Trageinheit 14 entlang der Längsachse 18 wird die Gehäuse-Reinigungseinheit 15 durch den Führungskörper 39 besonders zuverlässig entlang der Innenwand 38 geführt. Insbesondere wird eine beabstandete Führung der Gehäuse-Reinigungseinheit 15 zu der Innenwand 38 sichergestellt, wodurch Beschädigungen an dem Gehäuse 3 und an der Gehäuse-Reinigungseinheit 15 vermieden werden können.

Das Gehäuse-Kontaktreinigungselement 40 wird beim Drehen der Trageinheit 14 um die Längsachse 18 über die Innenwand 38 bewegt. Fest anhaftende Schmutzpartikel werden dabei zuverlässig von der Innenwand 38 abgebürstet. Mittels des Gehäuse-Kontaktreinigungselements 40 können auch Vertiefungen des Gehäuses 3 und/oder Sensoroberflächen, insbesondere von Sensoren, welche in den Vertiefungen angeordnet sind, zuverlässig gereinigt werden.

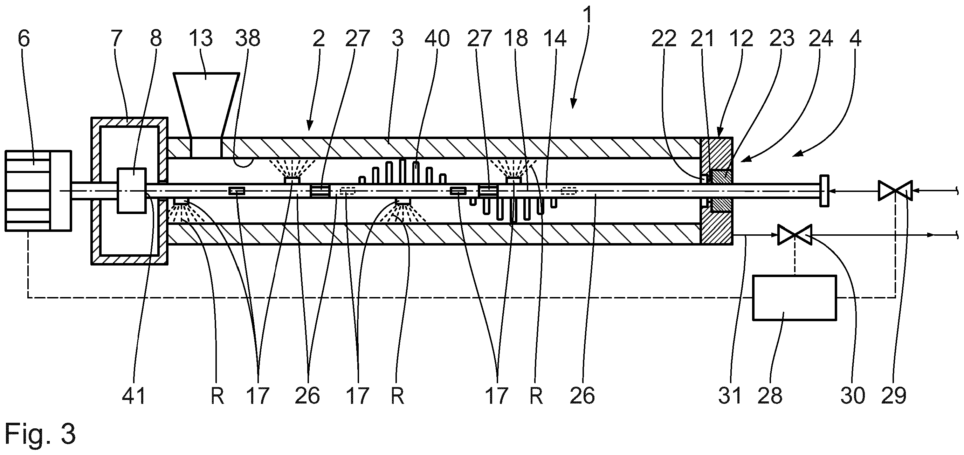

Anhand der Fig. 3 ist ein weiteres Reinigungssystem 1 bzw. eine weitere Gehäuse-Reinigungsvorrichtung 4 beschrieben. Im Unterschied zu den vorangegangenen Beispielen weist die Gehäuse-Reinigungsvorrichtung 4 keine Gehäuse-Antriebseinrichtung 25 auf. Die Trageinheit 14 umfasst einen Kupplungsabschnitt 41 zum Verbinden mit dem Wellenantrieb 6, insbesondere mit einer Laternenkupplung 8. Die Trageinheit 14 umfasst drei Tragmodule 26, welche mittels zweier Modulkupplungen 27 miteinander verbunden sind. An dem seitens der Getriebelaterne 7 angeordneten Tragmodul 26 ist eine Gehäuse-Reinigungseinheit 15 mit Gehäuse-Reinigungsdüsen 17 angeordnet. Die beiden auf Seiten der Verschließeinheit 12 angeordneten Tragmodule 26 sind jeweils mit einer Gehäuse-Reinigungseinheit 15 verbunden, welche sowohl Gehäuse-Reinigungsdüsen 17 als auch Gehäuse-Kontaktreinigungselemente 40 aufweist.

Die Gehäuse-Steuereinrichtung 28 zum Steuern einer Drehbewegung der Trageinheit 14 um die Längsachse 18 und eines Massenstroms des über die Gehäuse-Reinigungsdüsen 17 ausgebrachten Reinigungsmediums R steht in Signalverbindung mit dem Wellenantrieb 6, dem Zuflussventil 29 und dem Abflussventil 30.

Die Funktionsweise des Reinigungssystems 1 gemäß Fig. 3 entspricht der Funktionsweise des Reinigungssystems 1 gemäß den zuvor beschriebenen Beispielen. Zum Zusammensetzen der Trageinheit 14 werden die Tragmodule 26 über die Modulkupplungen 27 miteinander verbunden. Die Gehäuse-Reinigungsvorrichtung 4 kann so abhängig von dem Verschmutzungszustand und einer Geometrie des Gehäuses 3 flexibel konfiguriert werden. Insbesondere werden die Tragmodule 26 mit der jeweils daran angebrachten Gehäuse-Reinigungseinheit 15 entsprechend einer Erstreckung des Gehäuses 3 entlang der Längsachse 18 und entsprechend eines Innendurchmessers des Gehäuses 3 ausgewählt.

Die Gehäuse-Reinigungsvorrichtung 4 wird in das Gehäuse 3 eingeführt. Der Kupplungsabschnitt 41 wird drehfest mit der Laternenkupplung 8 verbunden. Über ein Signal der Steuervorrichtung 35 und der Gehäuse-Steuereinrichtung 28 wird die Trageinheit 14 mittels des Wellenantriebs 6 drehangetrieben. Das von der Versorgungseinrichtung 5 bereitgestellte Reinigungsmedium R wird über die Gehäuse-Reinigungsdüsen 17 in dem Gehäuse 3 ausgebracht. Die Gehäuse-Kontaktreinigungselemente 40 werden über die Innenwand 38 bewegt und reinigen diese berührend.

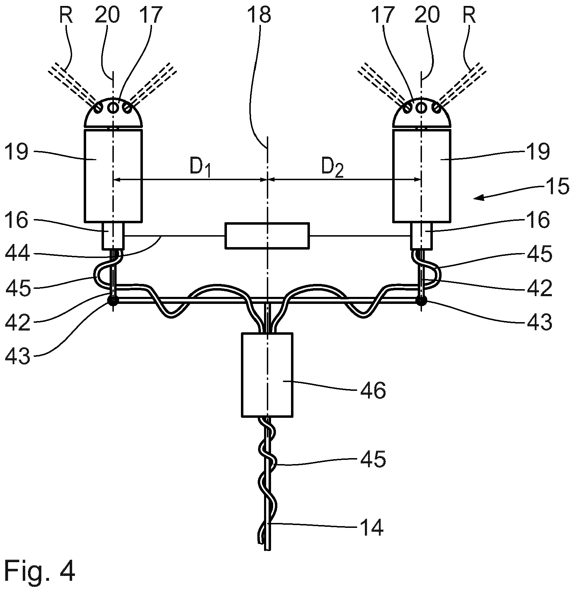

Anhand der Fig. 4 ist eine weitere Gehäuse-Reinigungsvorrichtung 4 beschrieben. Im Unterschied zu den vorangegangenen Beispielen weist die Trageinheit 14 zwei radial zu der Längsachse 18 beabstandete Tragarme 42 auf. Die Tragarme 42 sind diametral gegenüberliegend an der Trageinheit 14 angeordnet. An jedem der Tragarme 42 sind mehrere der Gehäuse-Reinigungsdüsen 17 angeordnet. Die Gehäuse-Reinigungsdüsen 17 sind jeweils um eine Gehäuse-Düsenachse 20 drehbar an einem Gehäuse-Düsengrundkörper 19 gelagert.

Die Gehäuse-Düsengrundkörper 19 sind an dem jeweiligen Tragarm 42 der Trageinheit 14 mittels je einer Tragkupplung 16 angebracht. Ein zu der Längsachse 18 radialer Abstand D₁, D₂ zwischen den Tragkupplungen 16 und der Längsachse 18 ist jeweils variabel einstellbar. Hierzu weisen die Tragarme 42 Armgelenke 43 auf. Die Tragkupplungen 16 sind über eine Teleskopstange 44 miteinander verbunden. Eine Länge der Teleskopstange 44 ist variabel einstellbar und arretierbar.

Zum Leiten des Reinigungsmediums R entlang der Trageinheit 14 weist die Gehäuse-Reinigungsvorrichtung 4 Schläuche 45 auf. Ein Verteiler 46 steht in fluidleitender Verbindung mit dem Zuflussventil 29. Die Tragkupplungen 16 sind mittels der Schläuche 45 fluidleitend mit dem Verteiler 46 verbunden.

Die Funktionsweise des Reinigungssystems 1 mit der Gehäuse-Reinigungsvorrichtung 4 gemäß Fig. 4 entspricht der Funktionsweise des Reinigungssystems 1 gemäß den davor beschriebenen Beispielen. Durch die Ausbildung der Trageinheit 14 mit den zwei zueinander beabstandeten Tragarmen 42 ist die Gehäuse-Reinigungsvorrichtung 4 besonders zur Reinigung von Mehrwellen-Schneckenmaschinen geeignet. Vorzugsweise wird der jeweilige Abstand D₁, D₂ derart eingestellt, dass er dem Abstand zwischen Mittellängsachsen zweier Gehäusebohrungen des Gehäuses 3 entspricht. Die zwei Gehäusebohrungen des Gehäuses 3 können somit zeitgleich gereinigt werden. Die Trageinheit 14 kann mittels der Gehäuse-Antriebseinrichtung 25 entlang der Längsachse 18 verlagert werden. Die Drehung der Gehäuse-Reinigungsdüsen 17 um die jeweilige Gehäuse-Drehachse 20 gewährleistet die zuverlässige Reinigung der jeweiligen Innenwand 38.

Verunreinigte oder defekte Gehäuse-Reinigungsdüsen 17 können durch Lösen der jeweiligen Tragkupplung 16 besonders einfach ausgewechselt werden. Insbesondere können auf den jeweiligen Einsatzbereich abgestimmte Gehäuse-Reinigungsdüsen 17 an der Trageinheit 14 angebracht werden.

Anhand der Fig. 5 ist ein erfindungsgemäßes Reinigungssystem 1 beschrieben. Im Unterschied zu den vorangegangenen Beispielen umfasst das Reinigungssystem 1 eine Wellen-Reinigungsvorrichtung 47 zum Reinigen der Behandlungselementwellen 9 der Schneckenmaschine 2. Die Wellen-Reinigungsvorrichtung 47 umfasst eine Reinigungskammer 48 und mehrere in der Reinigungskammer 48 angeordnete Wellen-Reinigungseinheiten 49. Ein Innenraum 50 der Reinigungskammer 48 ist derart dimensioniert, dass die jeweilige Behandlungselementwelle 9 durch diesen hindurchführbar ist. Die Reinigungskammer 48 weist mehrere Reinigungsabschnitte 51a, 51b, 51c, 51d auf. Die Reinigungsabschnitte 51a, 51b, 51c, 51d sind durch Kammerdichtungen 52 voneinander getrennt. Die Kammerdichtungen 52 gewährleisten eine weitestgehende Abdichtung des jeweiligen Reinigungsabschnitts 51a, 51b, 51c, 51d gegenüber Spritzwasser.

Die Wellen-Reinigungsvorrichtung 47 umfasst eine Wellen-Antriebseinrichtung 53 zum Verlagern der Behandlungselementwelle 9 relativ zu der Reinigungskammer 48, insbesondere durch den Innenraum 50 hindurch. Die Wellen-Antriebseinrichtung 53 ist als Bandförderer ausgebildet.

Die Reinigungskammer 48 weist in dem entlang einer Förderrichtung 54 ersten Reinigungsabschnitt 51a die mit Wellen-Reinigungsdüsen 55 ausgebildete Wellen-Reinigungseinheit 49 auf. In dem entlang der Förderrichtung 54 nachgeschalteten Reinigungsabschnitt 51b sind mehrere Wellen-Reinigungseinheiten 49 angeordnet. Diese umfassen die Wellen-Reinigungsdüsen 55 und Wellen-Kontaktreinigungselemente 56. Die Wellen-Kontaktreinigungselemente 56 sind als drehangetriebene Reinigungsbürsten, insbesondere als Bürstenwalzen, ausgebildet. Die Wellen-Reinigungseinheiten 49 in dem nachfolgenden Reinigungsabschnitt 51c weisen die Wellen-Reinigungsdüsen 55 auf. In dem letzten Reinigungsabschnitt 51d sind die Wellen-Reinigungseinheiten 49 als Trockengebläse 57 zum Trocknen der durch die Reinigungskammer 48 verlagerten Behandlungselementwelle 9 ausgebildet.

Die Wellen-Reinigungseinheit 49 steht mit einer Wellen-Steuereinrichtung 58 zum automatisierten Steuern der Verlagerung der Behandlungselementwelle 9 relativ zu der Reinigungskammer 48, zum Steuern der Wellen-Reinigungseinheiten 49 und zum Steuern eines Massenstroms des über die Wellen-Reinigungsdüsen 55 ausgebrachten Reinigungsmediums R in Signalverbindung. Die Gehäuse-Steuereinrichtung steht mit den Zuflussventilen 29 zum Zuführen unterschiedlicher Reinigungsmedien R und mit dem Abflussventil 30 zum Abfluss des mit Schmutzpartikeln beladenen Reinigungsmediums R in Signalverbindung.

Die Wellen-Reinigungsvorrichtung 47 ist an eine nicht dargestellte Versorgungsvorrichtung 5 angeschlossen. Hierzu steht die Gehäuse-Steuereinrichtung in Signalverbindung mit der Steuervorrichtung 35. Die Zuflussventile 29 stehen in fluidleitender Verbindung mit den Zuflusskupplungen 37 und das Abflussventil 30 steht in fluidleitender Verbindung mit der Abflusskupplung 36. Im Unterschied zu den vorangegangenen Ausführungsbeispielen weist die Versorgungsvorrichtung 5 eine zusätzliche Leitung zum Bereitstellen von Klarwasser auf. Diese steht über die zusätzliche Zuflusskupplung 37 in fluidleitender Verbindung mit den Wellen-Reinigungsdüsen 55 des dritten Reinigungsabschnitts 51c.

Die Unterteilung der Reinigungskammer 48 in mehrere Reinigungsabschnitte 51a, 51b, 51c, 51d ist zur räumlich getrennten Durchführung unterschiedlicher Reinigungsprozesse ausgebildet. Der erste Reinigungsabschnitt 51a ist als Einweichabschnitt ausgebildet. Der zweite Reinigungsabschnitt 51b ist als Strahl- und Kontaktreinigungsabschnitt ausgebildet. Der dritte Reinigungsabschnitt 51c ist als Spülabschnitt, zum Spülen der Behandlungselementwelle 9 mit Klarwasser und zum Entfernen von Reinigungsmedien ausgebildet. Der vierte Reinigungsabschnitt 51d ist zum Trocknen der Behandlungselementwelle 9 ausgebildet.

Die Reinigungskammer 48 ist modular ausgebildet. Hierzu umfasst die Reinigungskammer 48 vier miteinander reversibel verbindbare Kammermodule 59. Die Kammermodule 59 sind entlang einer Kammer-Längsachse 60 miteinander verbunden. Die Reinigungskammer 48 ist durch den modularen Aufbau an die Geometrie, insbesondere eine Länge, der Behandlungselementwelle 9 flexibel anpassbar. Je nach Beschaffenheit der Behandlungselementwelle 9 können die Kammermodule 59 auch entsprechend ihrer Reinigungsfunktion ausgewählt werden. Beispielsweise können die Reinigungsabschnitte 51a, 51b, 51c, welche als Feuchtreinigungsabschnitte ausgebildet sind, durch reine Trockenreinigungsabschnitte ersetzt werden.

Die Funktionsweise des Reinigungssystems 1 mit der Wellen-Reinigungsvorrichtung 47 ist wie folgt:
Wie vorstehend beschrieben wird die jeweilige Behandlungselementwelle 9 zunächst aus der Schneckenmaschine 2 entfernt. Die Behandlungselementwelle 9 wird der Wellen-Antriebseinrichtung 53 zugeführt. Mittels der Wellen-Steuereinrichtung 58 wird die Wellen-Antriebseinrichtung 53 aktiviert. Die Behandlungselementwelle 9 wird in den Innenraum 50 der Reinigungskammer 48 eingeführt. Die Wellen-Steuereinrichtung 58 stellt ein Signal zum Öffnen der Zuflussventile 29 und des Abflussventils 30 bereit und das Reinigungsmedium R wird über die Wellen-Reinigungsdüsen 55 in dem Innenraum 50 ausgebracht. Die Wellen-Steuereinrichtung 58 stellt ein Signal zum Aktivieren eines Drehantriebs der Wellen-Kontaktreinigungselemente 56 bereit.

Die Behandlungselementwelle 9 wird entlang der Kammer-Längsachse 60 durch die Reinigungskammer 48 verlagert. In dem ersten Reinigungsabschnitt 51a wird die Behandlungselementwelle 9 mit dem Reinigungsmedium R zum Einweichen von Verschmutzungen beaufschlagt. In dem zweiten Reinigungsabschnitt 51b wird die Behandlungselementwelle 9 mittels der als rotierende Reinigungsbürste ausgebildeten Wellen-Kontaktreinigungselemente 56 sowie mittels der Wellen-Reinigungsdüsen 55 gereinigt. In dem dritten Reinigungsabschnitt 51c wird das Reinigungsmedium R durch über die Wellen-Reinigungsdüsen 55 ausgebrachtes Klarwasser gereinigt. In dem vierten Reinigungsabschnitt 51d wird die Behandlungselementwelle 9 mittels des Trockengebläses 57 getrocknet. Die aus der Reinigungskammer 48 herausgeförderte Behandlungselementwelle 9 ist gereinigt und getrocknet.

Entsprechend der vorstehend beschriebenen Funktionsweise der Versorgungsvorrichtung 5 und der Steuervorrichtung 35 kann der Reinigungsprozess, insbesondere eine Reinigungsintensität und -dauer, entsprechend dem Verschmutzungszustand der Behandlungselementwelle 9 gesteuert werden.

Das Reinigungssystem 1 mit der Gehäuse-Reinigungsvorrichtung 4 bzw. der Wellen-Reinigungsvorrichtung 47 gewährleistet eine besonders effiziente und zuverlässige Reinigung des Gehäuses 3 bzw. der jeweiligen Behandlungselementwelle 9 der Schneckenmaschine 2. Die Ausbildung des Reinigungssystems 1 mit der Versorgungsvorrichtung 5 erlaubt eine umwelt-und ressourcenschonende Reinigung des Gehäuses 3 und der Behandlungselementwelle 9.

## Patentansprüche

1. Wellen-Reinigungsvorrichtung zum Reinigen mindestens einer Behandlungselementwelle einer Schneckenmaschine, aufweisend
- eine Reinigungskammer (48), in welcher die mindestens eine Behandlungselementwelle (9) anordenbar ist,
- mindestens einen Feuchtreinigungsabschnitt (51a, 51b, 51c),
- mindestens eine in der Reinigungskammer (48) angeordnete Wellen-Reinigungseinheit (49), **gekennzeichnet durch**
- mindestens einen Trockenreinigungsabschnitt (51d) und
- mindestens ein Trockengebläse (57) im Bereich des Trockenreinigungsabschnitts (51d).

2. Wellen-Reinigungsvorrichtung nach Anspruch 1, **dadurch gekennzeichnet, dass** die mindestens eine Wellen-Reinigungseinheit (49) mindestens eine Wellen-Reinigungsdüse (55) zum Ausbringen mindestens eines Reinigungsmediums (R) aufweist.

3. Wellen-Reinigungsvorrichtung nach Anspruch 1 oder 2, **gekennzeichnet durch** eine Wellen-Antriebseinrichtung (53) zum Verlagern der Behandlungselementwelle (9) relativ zu der mindestens einen Wellen-Reinigungseinheit (49).

4. Wellen-Reinigungsvorrichtung nach einem der vorstehenden Ansprüche, **dadurch gekennzeichnet, dass** die Reinigungskammer (48) modular ausgebildet ist und hierzu mindestens zwei entlang einer Kammer-Längsachse (60) der Reinigungskammer (48) miteinander reversibel verbindbare Kammermodule (59) aufweist.

5. Reinigungssystem mit
- einer Versorgungsvorrichtung (5) zum Bereitstellen mindestens eines Reinigungsmediums (R) und
- einer Wellen-Reinigungsvorrichtung (47) nach einem der Ansprüche 1 bis 4.

6. Reinigungssystem nach Anspruch 5, **dadurch gekennzeichnet, dass** die Versorgungsvorrichtung (5) einen Verschmutzungssensor (34) zum Erfassen eines mit einem Verschmutzungsgrad des mindestens einen Reinigungsmediums (R) korrelierenden Messwerts aufweist.

7. Reinigungssystem nach Anspruch 5 oder 6, **gekennzeichnet durch** eine Steuervorrichtung (35) zum automatisierten Steuern einer Reinigungsfunktion und/oder einer Reinigungsdauer.

8. Verfahren zum Reinigen einer Schneckenmaschine, umfassend die Schritte:
- Bereitstellen einer Schneckenmaschine (2) mit einem Gehäuse (3) und mindestens einer Behandlungselementwelle (9),
- Bereitstellen einer Wellen-Reinigungsvorrichtung (47) nach einem der Ansprüche 1 bis 4,
- Entfernen der mindestens einen Behandlungselementwelle (9) aus dem Gehäuse (3),
- Reinigen der mindestens einen Behandlungselementwelle (9), wobei die mindestens eine Behandlungselementwelle (9) außerhalb des Gehäuses (3) angeordnet ist.

9. Verfahren nach Anspruch 8, **gekennzeichnet durch** Ausbringen mindestens eines Reinigungsmediums (R) über die mindestens eine Wellen-Reinigungsdüse (55).

10. Verfahren nach Anspruch 8 oder 9, **gekennzeichnet durch** Bestimmen eines mit einem Verschmutzungsgrad des mindestens einen Reinigungsmediums (R) korrelierenden Messwerts.

11. Verfahren nach Anspruch 10, **gekennzeichnet durch** Steuern des Reinigungsprozesses in Abhängigkeit von dem Messwert.

## Claims

1. Shaft cleaning apparatus for cleaning at least one treatment element shaft of a screw machine, having
- a cleaning chamber (48), in which the at least one treatment element shaft (9) can be arranged,
- at least one wet-cleaning portion (51a, 51b, 51c),
- at least one shaft cleaning unit (49) arranged in the cleaning chamber (48),
**characterized by**
- at least one dry-cleaning portion (51d) and
- at least one drying fan (57) in the region of the dry-cleaning portion (51d).

2. Shaft cleaning apparatus according to Claim 1, **characterized in that** the at least one shaft cleaning unit (49) has at least one shaft cleaning nozzle (55) for discharging at least one cleaning medium (R).

3. Shaft cleaning apparatus according to Claim 1 or 2, **characterized by** a shaft drive device (53) for displacing the treatment element shaft (9) relative to the at least one shaft cleaning unit (49).

4. Shaft cleaning apparatus according to one of the preceding claims, **characterized in that** the cleaning chamber (48) has a modular design and in this respect has at least two chamber modules (59), which can be reversibly connected to one another along a chamber longitudinal axis (60) of the cleaning chamber (48).

5. Cleaning system having
- a supply apparatus (5) for providing at least one cleaning medium (R) and
- a shaft cleaning apparatus (47) according to one of Claims 1 to 4.

6. Cleaning system according to Claim 5, **characterized in that** the supply apparatus (5) has a contamination sensor (34) for detecting a measured value correlated with a degree of contamination of the at least one cleaning medium (R).

7. Cleaning system according to Claim 5 or 6, **characterized by** a control apparatus (35) for automatically controlling a cleaning function and/or a cleaning duration.

8. Method for cleaning a screw machine, comprising the steps of:
- providing a screw machine (2) having a housing (3) and at least one treatment element shaft (9),
- providing a shaft cleaning apparatus (47) according to one of Claims 1 to 4,
- removing the at least one treatment element shaft (9) from the housing (3),
- cleaning the at least one treatment element shaft (9), wherein the at least one treatment element shaft (9) is arranged outside the housing (3).

9. Method according to Claim 8, **characterized by** discharging at least one cleaning medium (R) via the at least one shaft cleaning nozzle (55).

10. Method according to Claim 8 or 9, **characterized by** determining a measured value correlated with a degree of contamination of the at least one cleaning medium (R).

11. Method according to Claim 10, **characterized by** controlling the cleaning process in dependence on the measured value.

## Revendications

1. Dispositif de nettoyage d'arbre destiné à nettoyer au moins un arbre d'élément de traitement d'une machine à vis, ledit dispositif comportant
- une chambre de nettoyage (48) dans laquelle peut être disposé l'au moins un arbre d'élément de traitement (9),
- au moins une portion de nettoyage par voie humide (51a, 51b, 51c),
- au moins une unité de nettoyage d'arbre (49) disposée dans la chambre de nettoyage (48),
**caractérisé par**
- au moins une portion de nettoyage à sec (51d) et
- au moins une soufflante de séchage (57) dans la zone de la portion de nettoyage à sec (51d).

2. Dispositif de nettoyage d'arbre selon la revendication 1, **caractérisé en ce que** l'au moins une unité de nettoyage d'arbre (49) comporte au moins une buse de nettoyage d'arbre (55) destinée à appliquer au moins un agent de nettoyage (R).

3. Dispositif de nettoyage d'arbre selon la revendication 1 ou 2, **caractérisé par** un module d'entraînement d'arbre (53) destiné à déplacer l'arbre d'élément de traitement (9) par rapport à l'au moins une unité de nettoyage d'arbre (49).

4. Dispositif de nettoyage d'arbre selon l'une des revendications précédentes, **caractérisé en ce que** la chambre de nettoyage (48) est conçue de manière modulaire et comporte pour cela au moins deux modules de chambre (59) qui peuvent être reliés de manière réversible l'un à l'autre le long d'un axe longitudinal (60) de la chambre de nettoyage (48).

5. Système de nettoyage comprenant
- un dispositif d'alimentation (5) destiné à fournir au moins un agent de nettoyage (R) et
- un dispositif de nettoyage d'arbre (47) selon l'une des revendications 1 à 4.

6. Système de nettoyage selon la revendication 5, **caractérisé en ce que** le dispositif d'alimentation (5) comporte un capteur de contamination (34) destiné à détecter une valeur de mesure qui est en corrélation avec un degré de contamination de l'au moins un agent de nettoyage (R).

7. Système de nettoyage selon la revendication 5 ou 6, **caractérisé par** un dispositif de commande (35) destiné à commander automatiquement une fonction de nettoyage et/ou une durée de nettoyage.

8. Procédé de nettoyage d'une machine à vis, ledit procédé comprenant les étapes suivantes :
- fournir une machine à vis (2) comprenant un boîtier (3) et au moins un arbre d'élément de traitement (9),
- fournir un dispositif de nettoyage d'arbre (47) selon l'une des revendications 1 à 4,
- retirer l'au moins un arbre d'élément de traitement (9) du boîtier (3),
- nettoyer l'au moins un arbre d'élément de traitement (9), l'au moins un arbre d'élément de traitement (9) étant disposé à l'extérieur du boîtier (3).

9. Procédé selon la revendication 8, **caractérisé par** l'application d'au moins un agent de nettoyage (R) par le biais d'au moins une buse de nettoyage d'arbre (55).

10. Procédé selon la revendication 8 ou 9, **caractérisé par** la détermination d'une valeur de mesure qui est en corrélation avec un degré de contamination de l'au moins un agent de nettoyage (R).

11. Procédé selon la revendication 10, **caractérisé par** la commande du processus de nettoyage en fonction de la valeur de mesure.
